# EUROPÄISCHE PATENTSCHRIFT

(11) **EP 0 901 884 B1**
(45) Veröffentlichungstag und Bekanntmachung des Hinweises auf die Patenterteilung: **07.11.2001**
(21) Anmeldenummer: 98115784.5
(22) Anmeldetag: 21.08.1998
(51) Int. Cl.: B25B 1/24, B25B 1/10

(54) **Spannvorrichtung, insbesondere Maschinenschraubstock**
Clamping device, specially vice
Dispositif de serrage, notament étau

(30) Priorität: 08.09.1997 DE 29716103 U
(43) Veröffentlichungstag der Anmeldung: 17.03.1999
(73) Patentinhaber: Gressel AG, CH-8255 Aadorf (CH)
(72) Erfinder: Berchtold, Heinrich, 8606 Nänikon/Uster (CH)
(74) Vertreter: Rapp, Bertram

(56) Entgegenhaltungen:
- US-A- 5 022 636
- US-A- 5 098 073
- US-A- 5 242 159

## Beschreibung

Die Erfindung betrifft eine Spannvorrichtung, insbesondere einen Maschinenschraubstock, mit einem Grundkörper, mit zwei in diesem verschiebbaren Schlitten, die an ihrer Oberseite je eine Spannbacke tragen und mittels einer axial beweglichen Schraubspindel gegenläufig verschiebbar sind, mit einer im mittleren Bereich des Grundkörpers fixierbaren, mittleren Spannbacke, mit einem im Bereich des Bedienungsendes des Grundkörpers gegenüber diesem verschiebbar angeordneten Abstützteil, mit einer diesem zugeordneten Klemmeinrichtung, mit einer am Abstützteil abgestützten, in Schlittenverschieberichtung wirksamen Federanordnung, welche im Klemmzustand der Klemmeinrichtung auf einen der Schlitten eine in dessen Öffnungsrichtung gerichtete Kraft ausübt, und mit einer Halteschraube, welche sich durch das Abstützteil erstreckt.

Bei einer derartigen bekannten Spannvorrichtung (US-A-5 022 636 oder Firmenschrift der Firma HILMA-RÖMHELD GMBH, D-57260 Hilchenbach (Germany), "Technische Daten/ Zubehör, Doppelspannsystem DS 125", 4.3660, Seite 1, Ausgabe 3/96) ist das Abstützteil neben dem bedienungsseitigen Ende des einen Schlittens im Grundkörper verschiebbar angeordnet. In dem Abstützteil ist eine senkrecht zum Basisteil des Grundkörpers verlaufende Klemmschraube vorgesehen, mit der das Abstützteil gegenüber dem Grundkörper festklemmbar ist, wenn die sogenannte, weiter unten noch näher beschriebene "DRITTHAND-Funktion" gewünscht wird. Als Federanordnung sind zwei Schraubenfedern vorgesehen, die sich jeweils einerseits an der dem Schlitten abgewandten Außenseite des Abstützteiles und andererseits je an dem Kopf einer Halteschraube abstützen, welche durch das Abstützteil hindurchgeführt und in den Schlitten eingeschraubt ist. Durch diese Federanordnung wird normalerweise das Abstützteil an den Schlitten angedrückt und zusammen mit dem Schlitten verschoben. Mit der bekannten Spannvorrichtung können gleichzeitig durch Betätigung einer einzigen Schraubspindel zwei Werkstücke gespannt werden, die auch unterschiedliche Abmessungen aufweisen können. Eines der Werkstücke wird dabei zwischen der Spannbacke des bedienungsseitigen arsten Schlittens und der mittleren Spannbacke, das andere Werkstück zwischen der Soannbacke des zweiten Schlittens und der mittleren Spannbacke gespannt. Vor dem Spannen ist es meist erforderlich, jedes der Werkstücke gegenüber dem Grundkörper bzw. den Spannbacken genau auszurichten. Bei manchen Werkstücken ist es erforderlich, das Werkstück solange in der ausgerichteten Lage festzuhalten, bis die Spannbacken mit ausreichender Kraft an das Werkstück angedrückt sind. Hat man jedoch zwei Werkstücke, die in der ausgerichteten Lage festgehalten werden müssen, dann benötigt man hierfür zwei Hände und man hat dann keine Hand mehr frei, um die Schraubspindel zu betätigen. Dieses Problem tritt auch immer dann auf, wenn der Grundkörper senkrecht auf einem Maschinentisch angeordnet ist. Damit man nun bei einer derartigen Spannvorrichtung (siehe US-A-5 022 636) mit nur einer Schraubspindel zunächst eines der Werkstücke ausrichten und dann so weit festklemmen kann, daß es in der ausgerichteten Lage zwischen den Spannbacken gehalten wird, ist die sogenannte DRITTHAND-Funktion vorgesehen. In diesem Fall wird zunächst durch Drehung der Schraubspindel zwischen der zweiten Spannbacke und der mittleren Spannbacke der für das zweite Werkstück erforderliche Abstand geschaffen und dieses dann zwischen diese beiden Spannbacken eingesetzt. Durch Ziehen der bedienerseitigen Schlitten-Spannbacken-Einheit zur Bedienerseite hin werden die zweite Spannbacke an dem zweiten Werkstück und letzteres an der mittleren Spannbacke spielfrei aneinander zur Anlage gebracht. Unter Beibehaltung dieses spielfreien Kontaktes wird dann durch weitere Drehung der Schraubspindel der Abstand zwischen bedienungsseitiger erster Spannbacke und mittlerer Spannbacke so eingestellt, daß das erste Werkstück gerade noch zwischen diese beiden Spannbacken eingesetzt werden kann. In dieser Stellung wird durch Betätigung der Klemmschraube das Abstützteil gegenüber dem Grundkörper festgeklemmt. Man betätigt jetzt die Schraubenspindel, wodurch das zweite Werkstück zwischen der zweiten Spannbacke und der mittleren Spannbacke geklemmt und in der ausgerichteten Lage gehalten, jedoch noch nicht gespannt wird. Dieses Klemmen ersetzt die dritte Hand und wird deshalb als DRITTHAND-Funktion bezeichnet. Das Klemmen des zweiten Werkstückes ist dadurch möglich geworden, daß der erste Schlitten zunächst durch das geklemmte Abstützteil und die Federanordnung unbeweglich gegenüber dem Grundkörper gehalten wird. Nachdem das zweite Werkstück in der beschriebenen Weise geklemmt ist, hat man wieder eine Hand frei und kann mit dieser das erste Werkstück zwischen die Spannbacke des ersten Schlittens und die mittlere Spannbacke einsetzen. Bei weiterer Drehung der Schraubspindel wird nun der erste Schlitten entgegen der Kraft der Federanordnung zum ersten Werkstück hin verschoben und das erste Werkstück zwischen der Spannbacke des ersten Schlittens und der mittleren Spannbacke geklemmt. Durch weitere Drehung der Schraubspindel werden dann schließlich beide Werkstücke gespannt. Wenn nach erfolgter Bearbeitung der Werkstücke die Spannvorrichtung wieder gelöst wird, dann geben zunächst die Spannbacken das erste Werkstück frei, während das zweite Werkstück bei eingeschalteter DRITTHAND-Funktion noch in der beschriebenen Weise geklemmt bleibt. Dies hat bei senkrecht stehendem Grundkörper den Vorteil, daß das zweite Werkstück nicht aus der Spannvorrichtung herausfällt, wenn man das erste Werkstück mit einer Hand entnimmt und mit der anderen Hand die Schraubspindel betätigt.

Da bei der vorbekannten Spannvorrichtung das Abstützteil neben dem ersten Schlitten angeordnet ist, können bei der Bearbeitung Späne zwischen den ersten Schlitten und Abstützteil fallen. Werden diese vor dem Entspannen nicht sorgfältig entfernt, dann arbeitet die DRITTHAND-Funktion nicht mehr richtig. Außerdem ergibt sich durch die Anordnung des Abstützteiles neben dem ersten Schlitten entweder eine größere Gesamtbaulänge der Spannvorrichtung oder ein geringerer Öffnungshub der Spannbacken.

Bei einer ähnlichen bekannten Spannvorrichtung (US-PS 5 098 073) ist das Abstützteil außen an der Stirnseite des Bedienungsendes des Grundkörpers angeordnet. Es umschließt eine konzentrisch zur Spindel angeordnete, gegenüber dieser axial unverschiebbare Hülse und kann an dieser in verschiedenen Axialstellungen festgeklemmt werden. Das Abstützteil greift geringfügig auch in eine in der Stirnseite des Bedienungsendes vorgesehene Ausnehmung ein. Unterhalb der Spindel weist das Abstützteil einen Ansatz auf, der ebenfalls in die stirnseitige Ausnehmung eingreift. In einer Bohrung des Ansatzes ist eine Ringschulter vorgesehen, an deren beiden Seiten sich je eine Federanordnung abstützt. Eine Halteschraube, an der sich eine der Federanordnungen abstützt, ist durch beide Federanordnungen hindurchgeführt und in das Basisteil des Grundkörpers eingeschraubt. Durch diese beiden Federanordnungen wird die Spindel so lange gegenüber dem Grundkörper axial unbeweglich gehalten, bis eine der beweglichen Spannbacken am ersten Werkstück anliegt. Auch diese Spannvorrichtung hat den Nachteil, daß das Abstützteil und auch die Hülse auf ihrer ganzen Länge über die Stirnseite des Bedienungsendes vorstehen und hierdurch die Gesamtbaulänge der Spannvorrichtung wesentlich vergrößern. Auch können Späne zwischen Abstützteil und Ausnehmung fallen und die Funktion beeinträchtigen.

Die gleichen Nachteile weist eine andere bekannte Spannvorrichtung (US-PS 4 934 674) auf, die große Ahnlichkeit mit der zuvor beschriebenen Spannvorrichtung hat. Auch bei dieser Spannvorrichtung ist das die Spindel umgebende Abstützteil außerhalb der Stirnseite des Grundkörpers angeordnet, wodurch die Gesamtbaulänge der Spannvorrichtung vergrößert wird.

Der Erfindung liegt daher die Aufgabe zugrunde, eine Spannvorrichtung, insbesondere einen Maschinenschraubstock, der eingangs erwähnten Art zu schaffen, die weniger schmutzempfindlich ist und deren Baulänge oder Öffnungsweite nicht durch das Abstützteil negativ beeinflußt wird.

Dies wird nach der Erfindung dadurch erreicht, daß das Abstützteil im unteren, der Spannbacke abgewandten Bereich des Schlittens und des Grundkörpers angeordnet ist, daß das Abstützteil einen Ansatz aufweist, welcher in einer stirnseitigen Ausnehmung des Basisteils des Grundkörpers begrenzt verschiebbar ist, daß die Federanordnung einerseits an dem Ansatz und andererseits in einer Vertiefung des Basisteils abgestützt ist, daß das Abstützteil ferner einen Finger aufweist, welcher in eine an der Unterseite des Schlittens vorgesehene Längsnut eingreift und an seinem der mittleren Spannbacke zugekehrten freien Ende die Klemmeinrichtung trägt, mit welcher der Finger in der Längsnut klemmbar ist.

Die Erfindung geht also von dem Gedanken aus, das Abstützteil im wesentlichen unterhalb des Schlittens anzuordnen. Hierdurch ist das Abstützteil während der Bearbeitung von dem Schlitten abgedeckt. Es ist insbesondere kein zur Bearbeitungsseite hin offener Spalt zwischen Schlitten und Abstützteil vorhanden, so daß sich dementsprechend auch keine Späne oder sonstiger Schmutz festsetzen kann. Damit ist eine einwandfreie DRITTHAND-Funktion stets gewährleistet. Durch die spezielle Anordnung des Abstützteiles unterhalb des Schlittens und seine Ausgestaltung sowie die Platzierung der Federanordnung in einer Vertiefung des Basisteils wird erreicht, daß das Anschlagstück und sämtliche für die DRITTHAND-Funktion erforderliche Bauteile die Baulänge der Spannvorrichtung in keiner Weise negativ beeinträchtigen.

Vorteilhafte Ausgestaltungen der Erfindung sind in den Unteransprüchen gekennzeichnet.

Die Erfindung wird in folgendem, anhand eines in der Zeichnung dargestellten Ausführungsbeispieles näher erläutert.

Es zeigen:
- Figur 1: einen Längsschnitt der Spannvorrichtung nach der Linie I-I der Figur 3,
- Figur 2: einen ähnlichen Längsschnitt mit einer alternativen Anordnung des Abstützteiles,
- Figur 3: eine Stirnansicht in Richtung III der Figur 1,

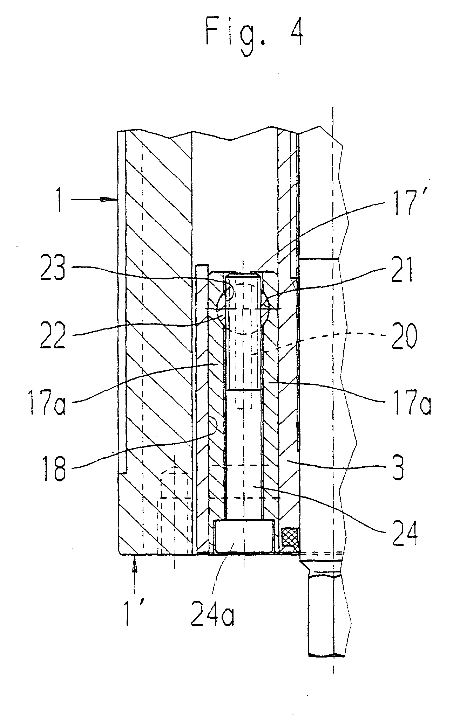

- Figur 4: einen Teillängsschnitt nach der Linie IV-IV der Figur 3,

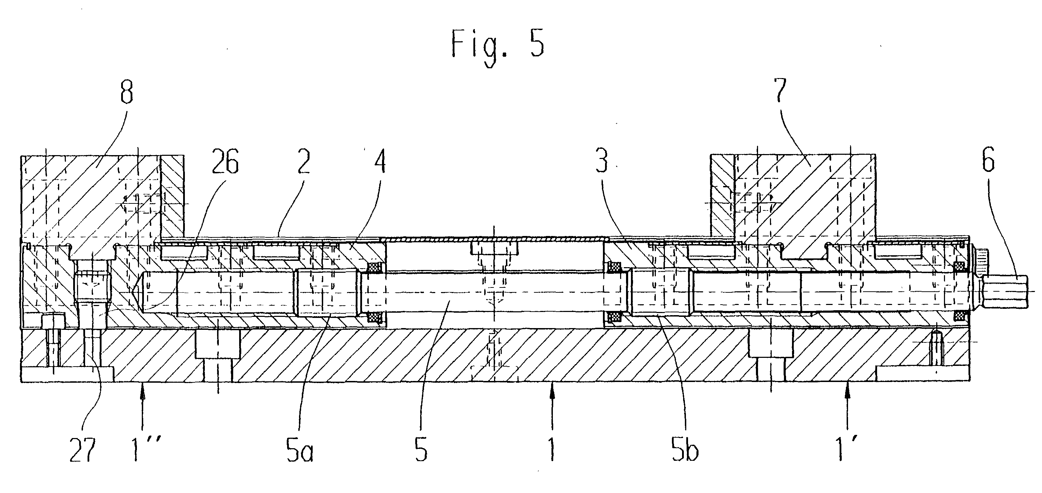

- Figur 5: einen weiteren Längsschnitt nach der Linie V-V der Figur 3.

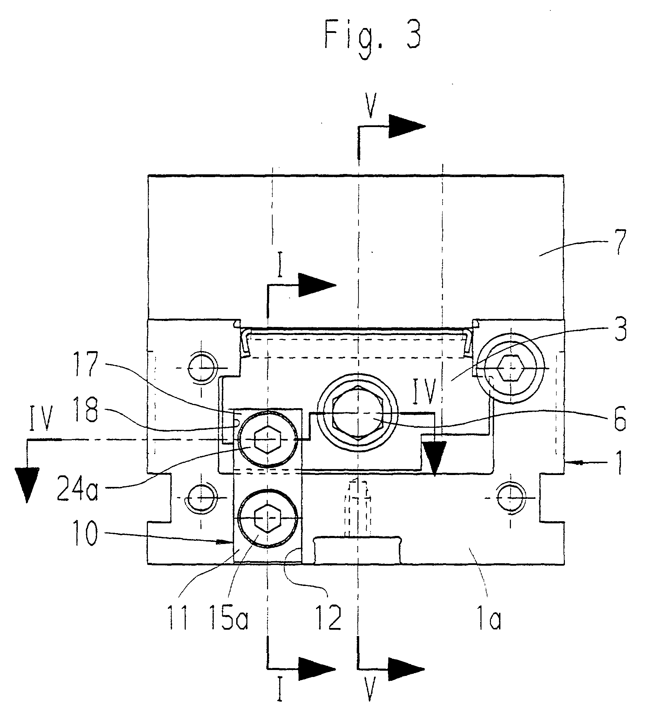

Die erfindungsgemäße Spannvorrichtung ist ein sogenannter Doppelspanner, mit dem gleichzeitig zwei Werkstücke oder nach Wegnahme der mittleren Spannbacke auch ein großes Werkstück gespannt werden können. Der Grundkörper 1 weist einen im wesentlichen U-förmigen Querschnitt auf, wie aus Figur 3 erkennbar ist. Die oberen Enden der beiden U-Sonenkel bilden Auflageflächen 2 für die Werkstücke. In den Grundkörper sind zwei Schlitten 3, 4 in Längsrichtung desselben verschiebbar geführt. Der Antrieb dieser Schlitten 3, 4 erfolgt über eine Schraubspindel 5, deren Gewinde 5a, 5b entgegengesetzte Steigungen aufweisen. Die Gewinde 5a, 5b greifen in entsprechende Muttergewinde der Schlitten 3, 4 ein. Die Schraubspindel 5 weist an ihrem einen Ende einen Sechskant 6 oder dgl. zum Ansetzen eines nicht dargestellten Handhebels oder einer Kurbel auf. Das im Bereich des Sechskant 6 liegende Ende der Spannvorrichtung wird hier als Bedienungsende bezeichnet.

Jeder der beiden Schlitten 3, 4 trägt an seiner Oberseite eine in Schlittenlängsrichtung versetzbare und auch auswechselbare Spannbacke 7, 8. Im mitteren Bereich des Grundkörpers 1 ist eine mittlere Spannbacke 9 fixierbar.

Am Bedienungsende 1' des Grundkörpers 1 ist ein Abstütztail 10 vorgesehen. Dieses Abstützteil 10 ist im wesentlichen im unteren, der Spannbacke 7 abgewandten Bereich des Schlittens 3 und des Grundkörpers 1 angeordnet. Das Abstützteil 10 weist einen nach unten ragenden Ansatz 11 auf, welcher in einer stirnseitigen Ausnehmung 12 des Basisteiles 1a des Grundkörpers in dessen Längsrichtung begrenzt verschiebbar ist. Mit Basisteil 1a ist hier das die beiden U-Schenkel des Grundkörpers 1 verbindende Stegteil bezeichnet. Eine Federanordnung 13, die z.B. aus der in den Zeichnungen dargestellten Schraubenfeder oder gegebenenfalls auch mehreren Tellerfedern bestehen kann, stützt sich einerseits an dem Ansatz 11 und andererseits in einer im Basisteil 1a vorgesehenen Vertiefung 14 ab. Innerhalb dieser Federanordnung 13 ist koaxial zu dieser eine Halteschraube 15 vorgesehen, die in eine am Grunde der Vertiefung 14 angeordnete Gewindebohrung 16 eingeschraubt ist und an derem Kopf 15a sich der unter der Wirkung der Federanordnung 13 stehende Ansatz 11 abstützt. Die Halteschraube 15 ist durch den Ansatz 11 hindurchgeführt.

Das Abstützteil 10 weist ferner einen Finger 17 auf, welcher in eine an der Unterseite des Schlittens 3 vorgesehene, nach unten offene Längsnut 18 desselben eingreift. Der Finger 17 weist an seinem der mittleren Spannbacke 9 zugekehrten freien Ende 17' eine nachstehend noch näher beschriebene Klemmeinrichtung 19 auf, mit welcher der Finger 17 gegenüber der Längsnut 18 festklemmbar ist.

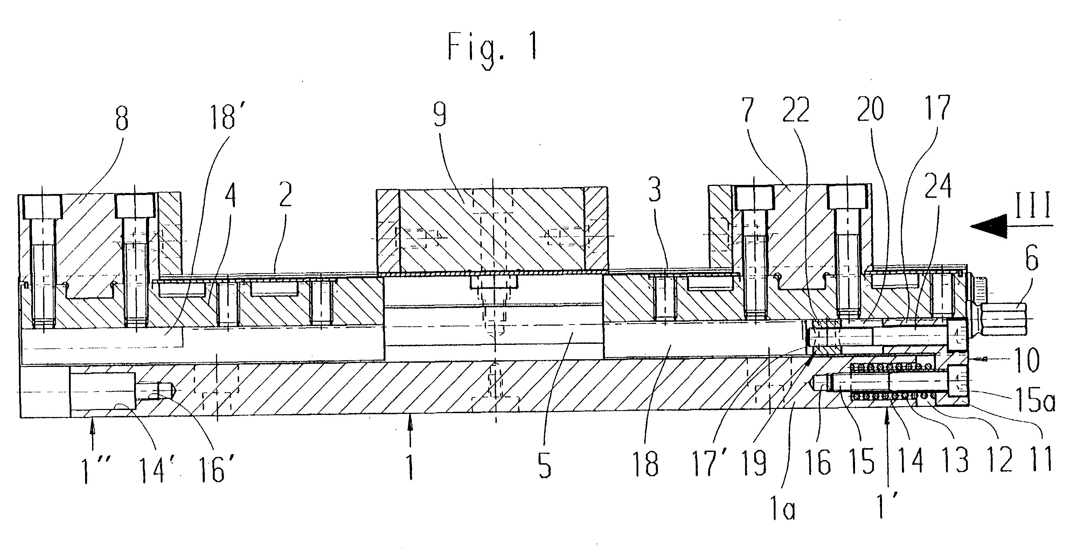

Zur Ausbildung der Klemmeinrichtung 19 ist der Finger 17 durch einen an dessen freiem Ende 17' mündenden Längsschlitz 20 in zwei Fingerabschnitte 17a geteilt. Der Längsschlitz 20 verläuft senkrecht zum Grund der Nut 18 und erstreckt sich über einen wesentlichen Teil der Fingerlänge, vorzugsweise etwa über die Hälfte derselben. In der Nähe des freien Endes 17' des Fingers 17 ist eine Querbohrung 21 vorgesehen, deren Achse ebenfalls senkrecht zum Nutgrund angeordnet ist und die sich je zur Hälfte in jeden Fingerabschnitt 17a erstreckt. In der Querbohrung 21 ist ein Querbolzen 22 angeordnet, der eine senkrecht zu seiner Achse verlaufende Gewindebohrung 23 aufweist. In diese Gewindebohrung 23 greift eine sich in Längsrichtung des Fingers 17 erstreckende Klemmschraube 24 ein, die sich bei der in Figur 1 und 3 gezeigten Einbaustellung des Abstützteiles 10 mit ihrem Kopf 24a an einem Absatz des Abstützteiles 10 abstützt.

Wenn die Soannvorrichtung flach liegend auf einem Arbeitstisch einer Werkzeugmaschine oder dgl. angeordnet ist und Werkstücke beim Spannen nicht mit der Hand festgehalten werden müssen, kann man zwei Werkstücke nacheinander einfach zwischen die Soannbacken 7, 8, 9 einlegen und dann durch Drehung der Soindel 5 die beiden Schlitten 3, 4 zur mittleren Spannbacke 9 hin bewegen, wodurch dann durch Drehung einer Schraubspindel beide Werkstücke gleichzeitig gespannt werden.

Wenn jedoch die Werkstücke zunächst genau gegenüber den Spannbacken 7, 8, 9 bzw. dem Grundkörper 1 ausgerichtet werden müssen und dabei jedes der Werkstücke mit einer Hand festgehalten werden muß, was insbesondere bei senkrechter Anordnung des Grundkörpers 1 der Fall ist, dann benötigt man hierzu, wie eingangs ausführlich dargelegt wurde, die DRITTHAND-Funktion. Nachdem die Spannbacken 8, 9 spielfrei an dem zwischen sie eingesetzten zweiten Werkstück zur Anlage gebracht wurden, wird durch Drehung der Schraubspindel 5 der Schlitten 3 in einen Abstand zur mittleren Spannbacke 9 gebracht, der etwas größer ist als die zu spannende Abmessung des zwischen die Spannbacken 7, 9 einzusetzenden ersten Werkstückes. Wenn dieser Abstand erreicht ist, wird die Klemmschraube 24 gedreht, wodurch der Querbolzen 22 zum Schraubenkopf 24a hin gezogen wird. Hierdurch tritt der Querbolzen 22 etwas aus der Querbohrung 21 heraus und spreizt die durch den Längsschlitz 20 gebildeten Fingerabschnitte 17a nach außen, so daß sie sich klemmend gegen die Seitenwände der Längsnut 18 anlegen. Hierdurch ist der erste Schlitten 3 fest mit dem Abstützteil 10 verbunden, welches durch die Federanordnung 13 in der in Figur 1 dargestellten Position gehalten wird. Nachdem die Klemmeinrichtung 19 auf diese Weise betätigt wurde, wird die Spindel 5 so gedreht, daß der Schlitten 4 zur mittleren Spannbacke 9 gezogen wird. Der erste Schlitten 3 bewegt sich hierbei nicht, da er durch das Abstützteil 10 gehalten wird. Beim weiteren Drehen der Spindel werden die Spannbacken 8, 9 mit zunehmender Kraft an das zweite Werkstück angeklemmt. Die Klemmkraft ist dabei abhängig von der Kraft der Federanordnung 13. Würde bei weiterer Drehung der Spindel die Federkraft der Federanordnung 13 überwunden, dann würde sich der erste Schlitten 3 mit seiner Spannbacke 7 der mittleren Spannbacke 9 nähern und es könnte dann das erste Werkstück nicht mehr zwischen die Spannbacken 7, 9 eingesetzt werden. Aus diesem Grund wird die Drehung der Spindel 5 zunächst beendet, wenn das zweite Werkstück zwischen den Spannbacken 8, 9 so stark geklemmt ist, daß es sich nicht mehr aus seiner ausgerichteten Lage bewegt. Nachdem das erste Werkstück zwischen die beiden Spannbacken 7, 9 eingesetzt ist, kann die Spindel 5 weiter in Spannrichtung gedreht werden, bis auch die beiden Spannbacken 7, 9 an das Werkstück angedrückt sind. Hierbei muß die Kraft der Federanordnung 13 überwunden werden. Bei weiterem Drehen der Schraubspindel 5 in Spannrichtung werden alle drei Backen 7, 8, 9 an die zugehörigen beiden Werkstücke fest angedrückt und der Spannvorgang ist somit beendet. Das Entspannen und die Entnahme der Werkstücke erfolgt in umgekehrter Weise. Wenn eine Serie mit Werkstücken gleicher Abmessungen nacheinander gespannt werden soll, dann bleibt selbstverständlich nach dem Entspannen der Spannbacken die Klemmschraube 24 weiterhin angezogen, denn die erste Spannbacke 7 ist dann bereits auf die Größe des zu spannenden ersten Werkstückes eingestellt.

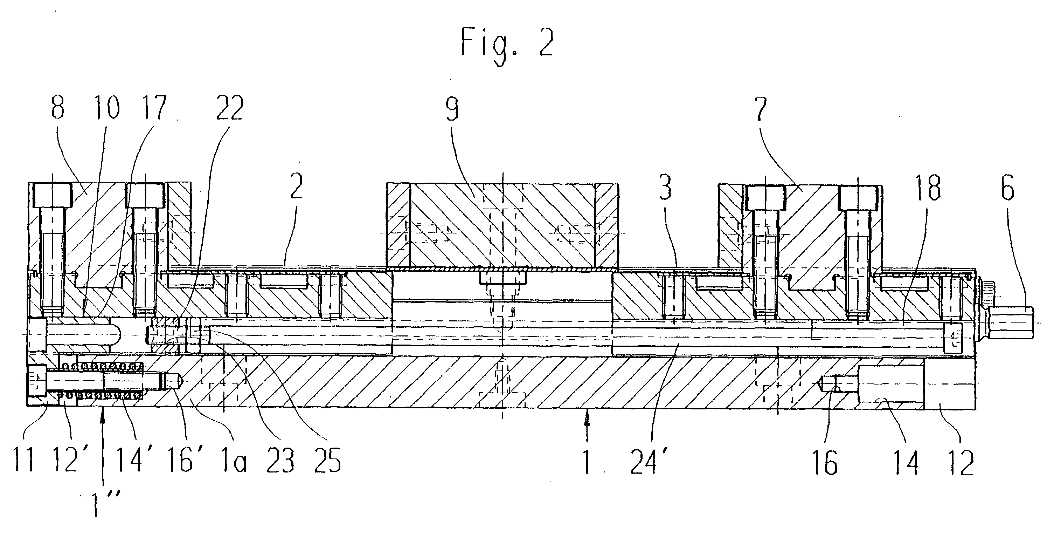

Bei der beschriebenen Anordnung des Abstützteiles 10 am Bedienungsende des Schraubstockes wird stets das zweite Werkstück zwischen den Spannbacken 8, 9 zuerst gespannt. Probleme können sich dann ergeben, wenn bei vertikaler Anordnung des Grundkörpers 1 das zweite Werkstück schwer ist, so daß die Kraft der Federanordnung 13 nicht ausreicht, das zweite Werkstück zu klemmen, während das erste Werkstück noch nicht zwischen die Spannbacken 7, 9 eingesetzt und gespannt ist. In solchen Fällen kann das Anschlagstück 10, welches verhältnismäßig klein ist, und vor allem in Längsrichtung der Spannvorrichtung keinen zusätzlichen Platz erfordert, an das dem Bedienungsende 1' des Grundkörpers 1 gegenüberliegende Ende 1" montiert werden. Zu diesem Zweck weist das Basisteil 1a des Grundkörpers 1 an dem gegenüberliegenden Ende 1" eine zweite Ausnehmung 12' und eine zweite Vertiefung 14' sowie eine zweite Gewindebohrung 16' auf. Außerdem ist der zweite Schlitten 4 mit einer Längsnut 18' versehen, die in Verlängerung der Längsnut 18 des ersten Schlittens 3 liegt. Durch Lösen der Halteschraube 15 können das Abstützteil 10 und die Federanordnung 13 von dem Bedienungsende 1' abgenommen und am gegenüberliegenden Ende 1" des Grundkörpers 1 montiert werden. Die Halteschraube 15 wird zu diesem Zweck in die Gewindebohrung 16' eingeschraubt, wie es in Figur 2 dargestellt ist. Der Finger 17 greift nunmehr in die Längsnut 18' ein. Anstelle der Klemmschraube 24 wird in dieser Stellung des Abstützteiles 10 eine lange Klemmschraube 24' in die Gewindebohrung 23 des Querbolzens 22 eingeschraubt. Die lange Klemmschraube 24' stützt sich über eine Mutter 25 am freien Ende 17' des Fingers 17 ab, wobei diese Mutter 25 gegenüber der Klemmschraube 24' fixiert ist. Um die DRITTHAND-Funktion wirksam werden zu lassen, wird die lange Klemmschraube 24' gedreht, wodurch der Querbolzen 22 zum freien Ende 17' des Fingers 17 hin gezogen wird. Er spreizt hierbei die Fingerabschnitte 17a nach außen gegen die Seitenwände der Längsnut 18', wodurch die Klemmung zwischen dem Abstützteil 10 und dem zweiten Schlitten 4 hergestellt ist. Dank der langen Klemmschraube 24' kann die Klemmeinrichtung 19 auch bei vertikal angeordnetem Grundkörper 1 von der Bedienungsseite her betätigt werden. Das schwere Werkstück wird als erstes zwischen die beiden Spannbacken 7, 9 eingesetzt und durch Drehung der Schraubspindel 5 zunächst in der vorher beschriebenen Weise geklemmt. Da sein Gewicht nach unten wirkt, stützt sich das Gewicht an der gegenüber dem Grundkörper 1 fixierten mittleren Spannbacke 9 ab, so daß die von der Federanordnung 13 aufgebrachte, nach unten zur mittleren Spannbacke 9 hin gerichtete Kraft ausreicht, um auch schwerere Werkstücke so lange zu klemmen, bis ein weiteres Werkstück zwischen die Spannbacken 8, 9 eingesetzt und gespannt ist.

Wenn größere Werkstücke gespannt werden sollen, die nicht zwischen die Spannbacken 7 und 8 bzw. 8 und 9 passen, dann kann die mittlere Spannbacke 9 vom Grundkörper 1 abgenommen werden und es können dann einzelne Werkstücke zwischen den Spannbacken 7, 8 gespannt werden. Hierzu ist es allerdings erforderlich, einen der beiden Schlitten gegenüber dem Grundkörper 1 zu fixieren. Eine Fixierung mittels der am Finger 17 vorgesehenen Klemmeinrichtung 19 reicht nicht aus, da die Kraft der Federanordnung 13 zwar zu einem vorübergehenden Klemmen, jedoch nicht zu einem festen Spannen geeignet ist. Deshalb ist in dem vom Bedienungsende 1' entfernt angeordneten zweiten Schlitten 4 ein verschraubbarer Fixierbolzen 26 vorgesehen. Die Achse dieses Fixierbolzens 26 verläuft senkrecht zum Basisteil 1a des Grundkörpers 1. Im Basisteil 1a ist eine Fixierbohrung vorgesehen. Bei abgenommener mittlerer Spannbacke 9 wird der Fixierbolzen 26 zugedreht, daß sein freies Ende in die Fiexierbohrung eingreift. Der zweite Schlitten 4 und die mit ihm verbundene Spannbacke 8 sind dann in vorbestimmter Lage gegenüber dem Grundkörper 1 fixiert. Ein größeres Werkstück kann dann wie in einem normalen Maschinenschraubstock mit zwei Backen zwischen den beiden Spannbacken 7, 8 durch Drehung der Schraubspindel 5 gespannt werden.

## Patentansprüche

1. Spannvorrichtung, insbesondere Maschinenschraubstock, mit einem Grundkörper (1), mit zwei in diesem verschiebbaren Schlitten (3,4), die an ihrer Oberseite je eine Spannbacke (7,8) tragen und mittels einer axial beweglichen Schraubspindel (5) gegenläufig verschiebbar sind, mit einer im mittleren Bereich des Grundkörpers (1) fixierbaren, mittleren Spannbacke (9), mit einem im Bereich des Bedienungsendes (1') des Grundkörpers (1) gegenüber diesem verschiebbar angeordneten Abstützteil (10), mit einer diesem zugeordneten Klemmeinrichtung (19), mit einer am Abstützteil (10) abgestützten, in Schlittenverschieberichtung wirksamen Federanordnung (13), welche im Klemmzustand der Klemmeinrichtung (19) auf einen der Schlitten (3,4) eine in dessen Öffnungsrichtung gerichtete Kraft ausübt, und mit einer Halteschraube (15), welche sich durch das Abstützteil (10) erstreckt, **dadurch gekennzeichnet, daß** das Abstützteil (10) im unteren, der Spannbacke (7) abgewandten Bereich des Schlittens (3) und des Grundkörpers (1) angeordnet ist, daß das Abstützteil (10) einen Ansatz (11) aufweist, welcher in einer stirnseitigen Ausnehmung (12) das Basisteiles (1a) des Grundkörpers (1) begrenzt verschiebbar ist, daß die Federanordnung (13) einerseits an dem Ansatz (11) und andererseits in einer Vertiefung (14) des Basisteils (1a) abgestützt ist, daß das Abstützteil (10) ferner einen Finger (17) aufweist, welcher in eine an der Unterseite des Schlittens (7) vorgesehene Längsnut (18) eingreift und an seinem, der mittleren Spannbacke (9) zugekehrten, freien Ende (17') die Klemmeinrichtung (19) trägt, mit welcher der Finger (17) in der Längsnut (18) klemmbar ist.

2. Vorrichtung nach Anspruch 1, **dadurch gekennzeichnet, daß** zur Ausbildung der Klemmeinrichtung (19) der Finger (17) durch einen an dessen freiem Ende (17') mündenden und über einen wesentlichen Teil der Fingerlänge erstreckenden Längsschlitz (20), der senkrecht zum Nutgrund verläuft, in zwei Fingerabschnitte (17a) geteilt ist, daß in der Nähe des freien Endes (17') des Fingers (17) eine Querbohrung (21) vorgesehen ist, deren Achse senkrecht zum Nutgrund angeordnet ist und die sich je zur Hälfte in jeden Fingerabschnitt (17a) erstreckt, daß in der Querbohrung (21) ein Querbolzen (22) angeordnet ist, der eine senkrecht zu seiner Achse verlaufende Gewindebohrung (23) aufweist, und daß in diese eine in Längsrichtung des Fingers (17) und des Schlitzes (20) angeordnete Klemmschraube (24, 24') eingreift, die sich am Abstützteil (10) bzw. am freien Ende (17') des Fingers (17) abstützt.

3. Vorrichtung nach Anspruch 1 oder 2, **dadurch gekennzeichnet, daß** das Basisteil (1a) des Grundkörpers (1) an dem dem Bedienungsende (1') gegenüberliegenden Ende (1") eine zweite Ausnehmung (12') für den Ansatz (11) des Abstützteiles (10) und eine zweite Vertiefung (14') für die Federanordnung (13) aufweist, so daß das Abstützteil (10) wahlweise am gegenüberliegenden Ende (1") montierbar ist, daß der zweite Schlitten (4) an seiner Unterseite auch mit einer Längsnut (18') zum Eingriff des Fingers (17) versehen ist und daß eine lange Klemmschraube (24') vorgesehen ist, die sich vom Bedienungsende (1') aus bis zu dem Querbolzen (22) im Finger (17) des wahlweise am gegenüberliegenden Ende (1") montierten Abstützteiles (10) erstreckt.

4. Vorrichtung nach einem der Ansprüche 1 bis 3, **dadurch gekennzeichnet, daß** die Halteschraube (15) koaxial zur Federanordnung (13) angeordnet und in eine Gewindebohrung (16, 16') am Grund der Vertiefung (14, 14') im Basisteil (1a) eingeschraubt ist und daß sich der Ansatz (11) am Kopf (15a) der Halteschraube (15) abstützt.

5. Vorrichtung nach einem der Ansprüche 1 bis 4, **dadurch gekennzeichnet, daß** in dem vom Bedienungsende (1') entfernt angeordneten, zweiten Schlitten (4) ein verschraubbarer Fixierbolzen (26) angeordnet ist, dessen Achse senkrecht zum Basisteil (1a) des Grundkörpers (1) verläuft, und daß im Basisteil (1a) eine Fixierbohrung (27) vorgesehen ist, so daß der zweite Schlitten (4) bei abgenommener mittlerer Spannbacke (9) durch Eingriff des Fixierbolzens (26) in die Fixierbohrung (27) in vorbestimmter Lage gegenüber dem Grundkörper (1) fixierbar ist.

## Claims

1. Chucking device, in particular machine vice, with a base body (1), with two slides (3, 4) which are displaceable in the latter and on their upper side each carry a clamping jaw (7, 8) and are displaceable in opposite directions by means of an axially movable threaded spindle (5), with a middle clamping jaw (9) fixable in the middle area of the base body (1), with a supporting part (10) arranged displaceable in the area of the operating end (1') of the base body (1) in relation to the latter, with a clamping device (19) associated with this supporting part (10), with a spring arrangement (13) which is supported on the supporting part (10) and acts in the direction of displacement of the slide and in the clamping state of the clamping device (19) exerts a force on one of the slides (3, 4) in its opening direction, and with a holding screw (15) which extends through the supporting part (10), **characterised in that** the supporting part (10) is arranged in the lower area of the slide (3) and the base body (1) remote from the clamping jaw (7), **in that** the supporting part (10) exhibits a shoulder (11) which is displaceable to a limited degree in a front end recess (12) of the base part (1a) of the base body (1), **in that** the spring arrangement (13) is supported on one side on the shoulder (11) and on the other side in a cavity (14) of the base part (1a), **in that** the supporting part (10) also exhibits a finger (17) which engages in a longitudinal slot (18) provided on the underside of the slide (7) and at its free end (17') facing the middle clamping jaw (9) carries the clamping device (19) with which the finger (17) can be clamped in the longitudinal slot (18).

2. Device according to claim 1, **characterised in that** to form the clamping device (19) the finger (17) is divided into two finger portions (17a) by a longitudinal slit (20) which debouches at its free end (17') and extends over a major part of the length of the finger and runs perpendicular to the bottom of the slot, **in that** in the vicinity of the free end (17') of the finger (17) there is a transverse bore (21) the axis of which is arranged perpendicular to the bottom of the slot and each half of which extends into each finger portion (17a), **in that** a transverse bolt (22) which exhibits a threaded bore (23) running perpendicular to its axis is arranged in the transverse bore (21), and **in that** a clamping screw (24, 24') arranged in the longitudinal direction of the finger (17) and the slit (20) engages in this threaded bore (23) and is supported on the supporting part (10) or on the free end (17') of the finger (17).

3. Device according to claim 1 or 2, **characterised in that** at the opposite end (1") to the operating end (1') the base part (1a) of the base body (1) exhibits a second recess (12') for the shoulder (11) of the supporting part (10) and a second cavity (14') for the spring arrangement (13) so that the supporting part (10) can be mounted optionally at the opposite end (1"), **in that** on its underside the second slide (4) is also provided with a longitudinal slot (18') for engagement of the finger (17), and **in that** a long clamping screw (24') is provided which extends from the operating end (1') to the transverse bolt (22) in the finger (17) of the supporting part (10) mounted optionally at the opposite end (1").

4. Device according to one of claims 1 to 3, **characterised in that** the holding screw (15) is arranged coaxial with the spring arrangement (13) and is screwed into a threaded bore (16, 16') at the bottom of the cavity (14, 14') in the base part (1a), and **in that** the shoulder (11) is supported on the head (15a) of the holding screw (15).

5. Device according to one of claims 1 to 4, **characterised in that** a screwable fixing bolt (26) the axis of which runs perpendicular to the base part (1a) of the base body (1) is arranged in the second slide (4) arranged remote from the operating end (1'), and **in that** a fixing bore (27) is provided in the base part (1a) so that when the middle clamping jaw (9) is removed the second slide (4) can be fixed in a predetermined position in relation to the base body (1) by engagement of the fixing bolt (26) in the fixing bore (27).

## Revendications

1. Dispositif de serrage, notamment étau de machine, comprenant un corps principal (1), deux chariots (3, 4), qui peuvent être déplacés en translation dans celui-ci et qui portent chacun, sur sa face supérieure, une mâchoire de serrage (7, 8) respective et peuvent être déplacés en translation dans des sens opposés au moyen d'une barre filetée (5) mobile axialement, une mâchoire de serrage centrale (9) pouvant être immobilisée dans la zone centrale du corps principal (1), une pièce d'appui (10) disposée de façon à pouvoir être déplacée en translation vis-à-vis du corps principal (1) dans la zone de l'extrémité de manoeuvre (1') de celui-ci, un dispositif de blocage (19) associé à cette pièce d'appui (10), un agencement de ressort (13) qui prend appui sur la pièce d'appui (10) et exerce son action suivant la direction de déplacement en translation des chariots et qui, dans l'état de blocage du dispositif de blocage (19), exerce, sur l'un des chariots (3, 4), une force dirigée dans le sens d'ouverture de celui-ci, et une tige, et une vis de maintien (15) qui s'étend à travers la pièce d'appui (10), **caractérisé en ce que** la pièce d'appui (10) est disposée dans la zone inférieure, située à l'opposé de la mâchoire de serrage (7), du chariot (3) et du corps principal (1), **en ce que** la pièce d'appui (10) comporte une saillie (11) qui peut être déplacée en translation d'une manière limitée dans un évidement côté frontal (12) de la partie de base (1a) du corps principal (1), **en ce que** l'agencement de ressort (13) prend appui d'une part sur la saillie (11) et d'autre part dans une partie en retrait (14) de la partie de base (1a), et **en ce que** la pièce d'appui (10) comporte en outre un doigt (17) qui est en prise dans une rainure longitudinale (18) prévue sur la face inférieure du chariot (7) et qui, à son extrémité libre (17') située du côté de la mâchoire de serrage centrale (9), porte le dispositif de blocage (19) au moyen duquel le doigt (17) peut être bloqué dans la rainure longitudinale (18).

2. Dispositif suivant la revendication 1, **caractérisé en ce que**, pour réaliser le dispositif de blocage (19), le doigt (17) est divisé en deux segments de doigt (17a) par une fente longitudinale (20) qui débouche à son extrémité libre (17') et s'étend sur une partie importante de la longueur du doigt et qui est orientée perpendiculairement au fond de la rainure, **en ce qu'**au voisinage de l'extrémité libre (17') du doigt (17), il est prévu un perçage transversal (21) dont l'axe est disposé perpendiculairement au fond de la rainure et qui s'étend pour moitié dans chaque segment de doigt (17a) respectif, **en ce qu'**il est prévu, disposé dans le perçage transversal (21), une goupille transversale (22) qui comporte un perçage fileté (23) s'étendant perpendiculairement à son axe, et **en ce qu'**il est prévu, venant en prise dans ce perçage fileté, une vis de blocage (24, 24') qui est disposée suivant la direction longitudinale du doigt (17) et du chariot (20) et qui s'appuie sur la pièce d'appui (10), plus précisément sur l'extrémité libre (17') du doigt (17).

3. Dispositif suivant la revendication 1 ou 2, **caractérisé en ce qu'**à l'extrémité (1") située à l'opposé de l'extrémité de manoeuvre (1'), la partie de base (1a) du corps principal (1) comporte un second évidement (12') pour la saillie (11) de la pièce d'appui (10) et une seconde partie en retrait (14') pour l'agencement de ressort (13), de sorte que la pièce d'appui (10) peut être montée au choix à l'extrémité opposée (1"), **en ce que** le second chariot (4) est également pourvu, sur sa face inférieure, d'une rainure longitudinale (18') pour la venue en prise du doigt (17) et **en ce qu'**il est prévu une longue vis de blocage (24') qui s'étend de l'extrémité de manoeuvre (1') jusqu'à la goupille transversale (22) située dans le doigt (17) de la pièce d'appui (10) montée au choix à l'extrémité opposée (1").

4. Dispositif suivant l'une des revendications 1 à 3, **caractérisé en ce que** la vis de maintien (15) est disposée d'une manière coaxiale à l'agencement de ressort (13) et est vissée dans un perçage fileté (16, 16') ménagé au fond de la partie en retrait (14, 14') de la partie de base (1a) et **en ce que** la saillie (11) s'appuie sur la tête (15a) de la vis de maintien (15).

5. Dispositif suivant l'une des revendications 1 à 4, **caractérisé en ce qu'**il est prévu, disposée dans le second chariot (4) situé à distance de l'extrémité de manoeuvre (1'), une goupille d'immobilisation (26) qui peut être vissé et dont l'axe s'étend perpendiculairement à la partie de base (1a) du corps principal (1), et **en ce qu'**un perçage d'immobilisation (27) est prévu dans la partie de base (1), de sorte que, lorsque la mâchoire de serrage centrale (9) est ôtée, le second chariot (4) peut être immobilisé dans une position préfixée vis-à-vis du corps principal (1) par venue en prise de la goupille d'immobilisation (26) dans le perçage d'immobilisation (27).
